# EUROPÄISCHE PATENTSCHRIFT

(11) **EP 3 051 668 B1**
(45) Veröffentlichungstag und Bekanntmachung des Hinweises auf die Patenterteilung: **26.04.2017**
(21) Anmeldenummer: 15152666.2
(22) Anmeldetag: 27.01.2015
(51) Int. Cl.: H02K 1/27, H02K 1/28, H02K 15/12

(54) **Rotorsegment und Rotor einer elektrischen Maschine**
Rotor segment and rotor of an electric machine
Segment de rotor et rotor d'une machine électrique

(43) Veröffentlichungstag der Anmeldung: 03.08.2016
(73) Patentinhaber: Siemens Aktiengesellschaft, 80333 München (DE)
(72) Erfinder: Mundhas, Marcel, 85635 Höhenkirchen-Siegertsbrunn (DE)

(56) Entgegenhaltungen:
- EP-A1- 0 818 870
- EP-A1- 2 712 060
- EP-A2- 1 300 208
- EP-A2- 1 508 384
- DE-A1- 19 939 061
- DE-A1-102010 023 878
- US-A1- 2002 057 971
- US-A1- 2011 204 739

## Beschreibung

Die Erfindung betrifft ein Rotorsegment eines Rotors einer rotierenden elektrischen Maschine und einen Rotor einer rotierenden elektrischen Maschine.

Insbesondere betrifft die Erfindung Rotoren elektrischer Maschinen, deren Blechpakete aus Blechpaketsegmenten einzelner Rotorsegmente zusammengesetzt werden, wobei jedes Blechpaketsegment als ein aus einer Vielzahl einzelner Segmentbleche zusammengesetzter Segmentblechstapel ausgebildet ist und an einer Trägeroberfläche eines Blechpaketträgers des Rotors angeordnet wird. Derartige Blechpaketsegmente werden dem Radius des Blechpaketträgers bzw. eines Luftspalts zwischen dem Rotor und einem Stator einer elektrischen Maschine angepasst. Typischerweise liegen derartige Blechpaketsegmente flächig an der Trägeroberfläche an, so dass eine Krümmung einer trägeroberflächenseitigen Kontur eines Querschnitts der Blechpaketsegmente zu dem Radius des Blechpaketträgers bzw. Luftspalts korrespondiert. Dies erfordert für jeden Radius jeweils eine eigene Kontur. Die Segmentbleche, aus denen derartige Blechpaketsegmente zusammengesetzt werden, werden beispielsweise mittels einer Laserschneidanlage ausgeschnitten, wobei ihre Kontur dem Radius der jeweiligen Trägeroberfläche angepasst wird.

EP 0818870 A1 offenbart einen Reluktanzmotor mit einem feststehenden Abschnitt mit einem Kern zur Bildung eines sich bewegenden Magnetfeldes und einem beweglichen Abschnitt mit einem Kern zur Erzeugung von Bewegungen durch Wechselwirkung mit dem sich bewegenden Magnetfeld.

EP 1300208 A2 offenbart eine Pulvermetallrotoranordnung für eine Permanentmagnetmaschine mit einer Welle und mehreren Verbundwerkstoffpulvermetallscheiben, die axial entlang der Welle gestapelt und an der Welle angeordnet sind.

EP 2712060 A1 offenbart einen Permanentmagnetrotor mit mehreren Permanentmagnetmodulen, die auf einem äußeren oder inneren Umfang eines Rotorkranzes angeordnet sind.

US 2011/0204739 A1 offenbart eine Baugruppe und ein Verfahren zur Montage von Magneten auf einem Stahlblech-Rotorpaket.

Der Erfindung liegt die Aufgabe zugrunde, ein verbessertes Blechpaketsegment eines Rotors einer rotierenden elektrischen Maschine und einen verbesserten Rotor einer rotierenden elektrischen Maschine anzugeben.

Die Aufgabe wird erfindungsgemäß hinsichtlich des Rotorsegments durch die Merkmale des Anspruchs 1 und hinsichtlich des Rotors durch die Merkmale des Anspruchs 11 gelöst. Vorteilhafte Ausgestaltungen der Erfindung sind Gegenstand der Unteransprüche.

Ein erfindungsgemäßes Rotorsegment eines Rotors einer rotierenden elektrischen Maschine umfasst wenigstens einen als ein Zylinder mit einer Grundfläche, die zu einer Rotorachse des Rotors senkrecht ist, und einer zu der Grundfläche senkrechten Mantelfläche ausgebildeten Segmentblechstapel, der aus einer Vielzahl von entlang einer zu der Rotorachse parallelen axialen Richtung gestapelten, formgleichen Segmentblechen zusammengesetzt ist. Dabei hat die Grundfläche eine Grundflächenkontur, die aus einem rotorachsenseitigen ersten Konturabschnitt, einem dem ersten Konturabschnitt gegenüber liegenden zweiten Konturabschnitt und zwei dritten Konturabschnitten, die jeweils ein Ende des ersten Konturabschnitts und ein Ende des zweiten Konturabschnitts miteinander verbinden, besteht, wobei der erste Konturabschnitt wenigstens einen im Wesentlichen balligen Auflageabschnitt aufweist.

Unter einem Zylinder wird hier allgemein ein Körper verstanden, dessen Volumen ein Raumgebiet ist, das bei einer Parallelverschiebung einer ebenen, zusammenhängenden Grundfläche überstrichen wird. Dabei ist die Grundfläche nicht weiter eingeschränkt, d. h. die Grundfläche kann eine beliebige Grundflächenkontur haben und Löcher aufweisen. Unter der Grundflächenkontur wird dabei die Kontur eines äußeren Randes der Grundfläche verstanden, nicht jedoch die Konturen möglicherweise vorhandener Löcher. Unter einem balligen Abschnitt einer Grundflächenkontur wird ein konvexer, d. h. nach außen gewölbter Abschnitt verstanden.

Die ballige Ausführung eines rotorachsenseitigen Konturabschnitts der Grundfläche eines zylindrischen Rotorsegments ermöglicht vorteilhaft, das Rotorsegment problemlos an zylindrischen Blechpaketträgern unterschiedlicher Radien anzuordnen, da eine Auflagefläche des Rotorsegments nicht an den Radius des jeweiligen Blechpaketträgers angepasst sein muss. Dadurch können Blechpakete für Blechpaketträger unterschiedlicher Radien aus Rotorsegmenten gleichen Typs zusammengesetzt werden. Dies vereinfacht und verbilligt die Herstellung der Rotorsegmente gegenüber der Herstellung von Rotorsegmenten, die dem Radius des jeweiligen Blechpaketträgers angepasst sind. Insbesondere können die Segmentbleche, aus denen die Segmentblechstapel zusammengesetzt sind, in hoher Stückzahl gefertigt werden, wozu sich die Fertigung mittels eines Stanzwerkzeugs lohnt, wodurch die Fertigung beispielsweise gegenüber der Fertigung mittels einer Laserschneidanlage erheblich verbilligt wird. Darüber hinaus ermöglicht die Verwendung eines Stanzwerkzeugs eine hochgenaue Fertigung der Segmentbleche, welche die Weiterverarbeitung der Segmentbleche erheblich vereinfacht.

Ferner sieht die Erfindung vor, dass jeder Segmentblechstapel rotorachsenseitig eine parallel zu der Rotorachse verlaufende Nut zur Aufnahme eines Nutensteins aufweist.

Dies ermöglicht vorteilhaft, ein Rotorsegment mittels eines Nutensteins an einem Blechpaketträger zu befestigen.

Außerdem sieht die Erfindung vor, dass jeder erste Konturabschnitt genau zwei im Wesentlichen ballige Auflageabschnitte aufweist, zwischen denen ein Mittelabschnitt liegt, der eine Querschnittsfläche der Nut berandet. Vorzugsweise erstreckt sich dabei jeder Auflageabschnitt von dem Mittelabschnitt bis zu einem dritten Konturabschnitt.

Dies ist besonders vorteilhaft, da die Grundflächenkontur zu beiden Seiten der Nut ballig ausgeführt ist, so dass sich für Trägeroberflächen unterschiedlicher Radien zu beiden Seiten der Nut bzw. eines Nutensteins je eine Auflagefläche und damit eine stabile Anordnung des Rotorsegments an dem Blechpaketträger ergibt.

Eine Ausgestaltung der Erfindung sieht vor, dass wenigstens ein Auflageabschnitt mehrere konkave Unterabschnitte aufweist. Vorzugsweise sind die Unterabschnitte wenigstens eines Auflageabschnitts dabei derart ausgebildet, dass von je zwei Unterabschnitten derjenige Unterabschnitt eine größere Krümmung aufweist, der einem dritten Konturabschnitt näher ist.

Mit anderen Worten sieht diese Ausgestaltung vor, einen an sich balligen Auflageabschnitt mit einer Unterstruktur zu versehen, die mehrere konkave Unterabschnitte aufweist. Dadurch kann die Auflagefläche des Rotorsegments an dem Blechpaketträger vorteilhaft weiter erhöht werden, da für verschiedene Radien der Trägeroberfläche jeweils zwei der Bereiche des Auflageabschnitts an der Trägeroberfläche anliegen können.

Eine weitere Ausgestaltung der Erfindung sieht vor, dass wenigstens ein Auflageabschnitt mehrere gerade Unterabschnitte aufweist.

Auch durch diese Ausgestaltung der Erfindung kann die Auflagefläche des Rotorsegments an dem Blechpaketträger vorteilhaft weiter erhöht werden, da für verschiedene Radien der Trägeroberfläche jeweils ein einem Unterabschnitt entsprechender Bereich des Auflageabschnitts flächig an der Trägeroberfläche anliegen kann.

Eine weitere Ausgestaltung der Erfindung sieht vor, dass je zwei benachbarte Segmentbleche wenigstens eines Segmentblechstapels miteinander verklebt sind.

Dadurch werden Segmentbleche stabil zu einem Segmentblechstapel zusammengefügt.

Eine Ausgestaltung der Erfindung sieht vor, dass wenigstens ein Segmentblechstapel eine zur Rotorachse parallele Ausnehmung, die sich über eine gesamte Länge des Segmentblechstapels erstreckt, aufweist.

Eine derartige Ausnehmung ermöglicht vorteilhaft, zur Verspannung der Segmentbleche eines Segmentblechstapels ein Spannelement durch den Segmentblechstapel zu führen.

Eine weitere Ausgestaltung der Erfindung sieht vor, dass an einer der Rotorachse gegenüber liegenden Seite der Mantelfläche jedes Segmentblechstapels zwei durch einen sich parallel zur Rotorachse erstreckenden Zwischenraum voneinander beabstandete Permanentmagneten angeordnet sind.

Dadurch können die Rotorsegmente jeweils magnetisch zweipolig ausgeführt und zu Einheiten höherer Polpaarzahl zusammengesetzt werden.

Eine weitere Ausgestaltung der Erfindung sieht wenigstens zwei Segmentblechstapel vor, die durch eine Vergussmasse miteinander verbunden und relativ zueinander räumlich fixiert sind, so dass ihre Grundflächen in einer gemeinsamen Ebene und ihre Mantelflächen auf derselben Seite dieser Ebene liegen. Die Vergussmasse ist dabei beispielsweise ein Polyurethan.

Diese Ausgestaltung der Erfindung sieht also vor, mehrere Segmentblechstapel mittels einer Vergussmasse zu einem Rotorsegment zu verbinden. Derartige Rotorsegmente erleichtern sowohl die Montage als auch den Transport der Rotorsegmente gegenüber Rotorsegmenten, die lediglich einen Segmentblechstapel aufweisen.

Ein erfindungsgemäßer Rotor einer rotierenden elektrischen Maschine umfasst einen Blechpaketträger mit einer kreiszylindrischen Trägeroberfläche, deren Zylinderachse mit einer Rotorachse des Rotors zusammenfällt, und ein Blechpaket, das aus den Segmentblechstapeln mehrerer erfindungsgemäßer Rotorsegmente zusammengesetzt ist. Dabei sind die Rotorsegmente an der Trägeroberfläche des Blechpaketträgers nebeneinander angeordnet, so dass die Grundflächen der Segmentblechstapel aller Rotorsegmente senkrecht zur Rotorachse sind und jeweils mit wenigstens einem Auflageabschnitt an dem Blechpaketträger anliegen.

Das Blechpaket eines derartigen Rotors kann aus den oben genannten Gründen vorteilhaft aus Rotorsegmenten zusammengesetzt werden, deren Form weitgehend unabhängig vom Radius der Trägeroberfläche ist.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: einen Ausschnitt einer rotierenden elektrischen Maschine in einer schematischen Ansicht von vorn,
- FIG 2: eine perspektivische Darstellung eines ersten Ausführungsbeispiels eines Rotorsegments,
- FIG 3: schematisch ein zweites Ausführungsbeispiel eines Rotorsegments in einer Ansicht von vorn,
- FIG 4: eine perspektivische Darstellung eines dritten Ausführungsbeispiels eines Rotorsegments,
- FIG 5: schematisch das in Figur 4 dargestellte dritte Ausführungsbeispiel eines Rotorsegments in einer Ansicht von vorn, und
- FIG 6: schematisch ein viertes Ausführungsbeispiel eines Rotorsegments in einer Ansicht von vorn.

Einander entsprechende Teile sind in allen Figuren mit den gleichen Bezugszeichen versehen.

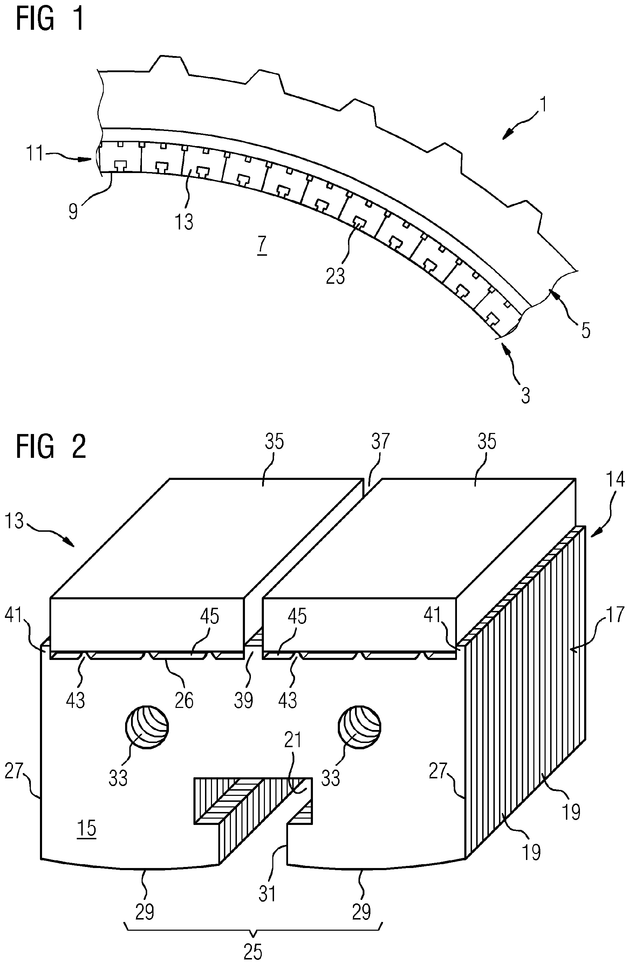

Figur 1 zeigt einen Ausschnitt einer rotierenden elektrischen Maschine 1 in einer schematischen Ansicht von vorn. Die elektrische Maschine 1 weist einen Rotor 3 und einen Stator 5 auf. Der Rotor 3 umfasst einen Blechpaketträger 7 mit einer kreiszylindrischen Trägeroberfläche 9, deren Zylinderachse mit einer zu der Zeichenebene der Figur 1 senkrechten Rotorachse des Rotors 3 zusammenfällt, und ein Blechpaket 11, das aus Segmentblechstapeln 14 mehrerer Rotorsegmente 13 zusammengesetzt ist.

Figur 2 zeigt eine perspektivische Darstellung eines ersten Ausführungsbeispiels eines Rotorsegments 13. Das Rotorsegment 13 umfasst einen Segmentblechstapel 14, der als ein Zylinder mit einer Grundfläche 15, die zu der Rotorachse senkrecht ist, und einer zu der Grundfläche 15 senkrechten Mantelfläche 17 ausgebildet ist und aus einer Vielzahl von entlang einer zu der Rotorachse parallelen axialen Richtung gestapelten, formgleichen Segmentblechen 19 zusammengesetzt ist. Je zwei benachbarte Segmentbleche 19 des Segmentblechstapels 14 sind miteinander verklebt.

Der Segmentblechstapel 14 weist rotorachsenseitig eine axial, d. h. parallel zu der Rotorachse verlaufende Nut 21 zur Aufnahme eines Nutensteins 23 auf, mittels dessen das Rotorsegment 13 an dem Blechpaketträger 7 in bekannter Weise, beispielsweise mittels eines durch den Nutenstein 23 in den Blechpaketträger 7 geführten Schraubelements, befestigt wird. Jede Nut 21 hat ein T-förmiges Profil, wobei ein Nutgrund der Nut 21 den Balken des T bildet. Jeder Nutenstein 23 hat eine zu diesem Profil korrespondierende T-förmige Querschnittsfläche, so dass der Nutenstein 23 in die Nut 21 einschiebbar bzw. der Segmentblechstapel 14 auf den Nutenstein 23 aufschiebbar ist.

Die Grundfläche 15 hat eine Grundflächenkontur, die aus einem rotorachsenseitigen ersten Konturabschnitt 25, einem dem ersten Konturabschnitt 25 gegenüber liegenden zweiten Konturabschnitt 26 und zwei dritten Konturabschnitten 27, die jeweils ein Ende des ersten Konturabschnitts 25 und ein Ende des zweiten Konturabschnitts 26 miteinander verbinden, besteht. Der erste Konturabschnitt 25 weist zwei ballige Auflageabschnitte 29 auf, zwischen denen ein Mittelabschnitt 31 liegt, der eine Querschnittsfläche der Nut 21 berandet, und die sich jeweils von dem Mittelabschnitt 31 bis zu einem der dritten Konturabschnitte 27 erstrecken.

Der Segmentblechstapel 17 weist ferner zwei zur Rotorachse parallele Ausnehmungen 33 auf, die sich über die gesamte Länge des Segmentblechstapels 17 erstrecken und zur Aufnahme jeweils eines (nicht dargestellten) Verspannelements ausgebildet sind, das zum Verspannen der Segmentbleche 19 durch die Ausnehmung 33 geführt wird.

Das Rotorsegment 13 umfasst ferner zwei quaderförmige Permanentmagneten 35, die an einer der Rotorachse gegenüber liegenden Seite der Stapelmantelfläche 17 des Segmentblechstapels 14 angeordnet sind und durch einen sich axial erstreckenden Zwischenraum 37 voneinander beabstandet sind. Dabei stehen sich entlang des Zwischenraums 37 ungleichnamige Magnetpole der Permanentmagneten 35 gegenüber. Zur Positionierung der Permanentmagneten 35 weist die der Rotorachse gegenüber liegende Seite der Stapelmantelfläche 17 einen mittig und axial verlaufenden Mittelsteg 39 und zwei jeweils entlang eines axialen Randes verlaufende Randstege 41 auf. Jeder Permanentmagnet 35 wird in einen Einlegbereich der Stapelmantelfläche 17 zwischen dem Mittelsteg 39 und einem der Randstege 41 eingelegt. In jedem dieser Einlegbereiche verlaufen drei axiale Wölbungen 43, auf denen einer der Permanentmagneten 35 aufliegt. Außerhalb der Wölbungen 43 entstehen dadurch zwischen einem Permanentmagnet 35 und dem jeweiligen Einlegbereich Klebespalte 45, in denen sich jeweils ein Klebstoff befindet, mittels dessen der Permanentmagnet 35 an die Stapelmantelfläche 17 geklebt ist.

Die Rotorsegmente 13 sind jeweils an der Trägeroberfläche 9 des Blechpaketträgers 7 nebeneinander angeordnet, so dass die Grundflächen 15 der Segmentblechstapel 14 aller Rotorsegmente 13 senkrecht zur Rotorachse sind und jeweils mit ihren Auflageabschnitten 29 an dem Blechpaketträger 7 anliegen. Dabei sind je zwei benachbarte Rotorsegmente 13 derart orientiert, dass ihre nebeneinander liegenden Permanentmagneten 35 einander zugewandte ungleichnamige Magnetpole aufweisen.

Bei der Herstellung des Rotorsegments 13 werden zunächst beispielsweise mittels eines Stanzwerkzeuges die Segmentbleche 19 hergestellt und zu dem Segmentblechstapel 14 verklebt. Anschließend werden die Permanentmagneten 35 auf den Segmentblechstapel 14 geklebt.

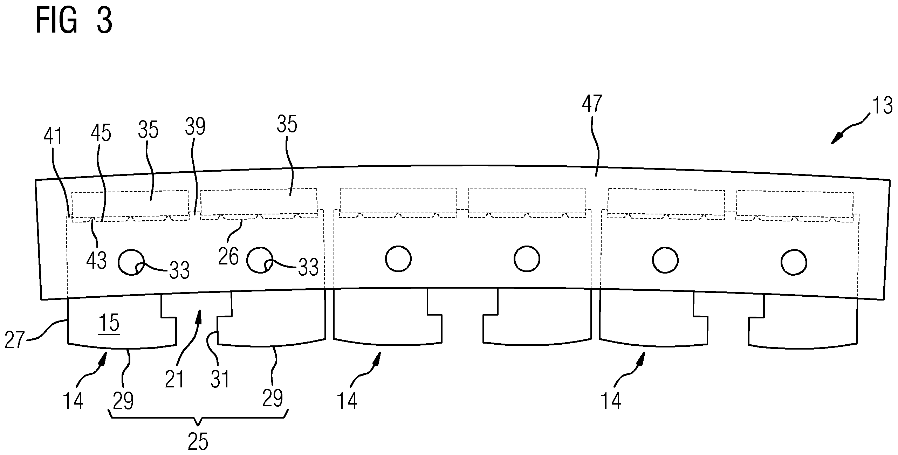

Figur 3 zeigt schematisch ein zweites Ausführungsbeispiel eines Rotorsegments 13 in einer Ansicht von vorn. Dieses Rotorsegment 13 umfasst drei Segmentblechstapel 14, die jeweils wie der Segmentblechstapel 14 des in Figur 1 dargestellten ersten Ausführungsbeispiels ausgebildet sind und wie dieser je zwei Permanentmagneten 35 tragen. Die drei Segmentblechstapel 14 und die Permanentmagneten 35 sind durch eine Vergussmasse 47 miteinander verbunden und relativ zueinander räumlich fixiert, so dass ihre Grundflächen 15 in einer gemeinsamen Ebene und ihre Mantelflächen 17 auf derselben Seite dieser Ebene liegen. Dabei umschließt die Vergussmasse 47 die Permanentmagneten 35 und einen Teilbereich der Segmentblechstapel 14 zwischen dem zweiten Konturabschnitt 26 und den Nuten 21 der Segmentblechstapel 14. Die Vergussmasse 47 ist beispielsweise ein Polyurethan. Die Rotorsegmente 13 sind analog zu Figur 1 nebeneinander an einer Trägeroberfläche 9 eines Blechpaketträgers 7 eines Rotors 3 angeordnet, um ein Blechpaket 11 des Rotors 3 zu bilden. Die relative Lage der Segmentblechstapel 14 des Rotorsegments 13 ist dem Radius der Trägeroberfläche 9 angepasst.

Bei der Herstellung des Rotorsegments 13 werden zunächst beispielsweise mittels eines Stanzwerkzeuges gestanzte Segmentbleche 19 zu den Segmentblechstapeln 14 zusammengefügt. Dann werden die Segmentblechstapel 14 mit jeweils zwei Permanentmagneten 35 bestückt. Die Segmentblechstapel 14 eines Rotorsegments 13 mit den Permanentmagneten 35 werden in eine Gießform eingelegt, deren Form und Größe zu der Anzahl der Segmentblechstapel 14 eines Rotorsegments 13 und deren relativer Lage korrespondiert, und in der Gießform mit Vergussmasse 47 vergossen.

Statt eines in Figur 3 dargestellten Rotorsegments 13 mit drei Segmentblechstapeln 14 und sechs Permanentmagneten 35 kann analog auch eine andere Anzahl von Segmentblechstapeln 14 und eine doppelt so große Anzahl von Permanentmagneten 35 durch Vergussmasse 47 zu einem Rotorsegment 13 verbunden werden.

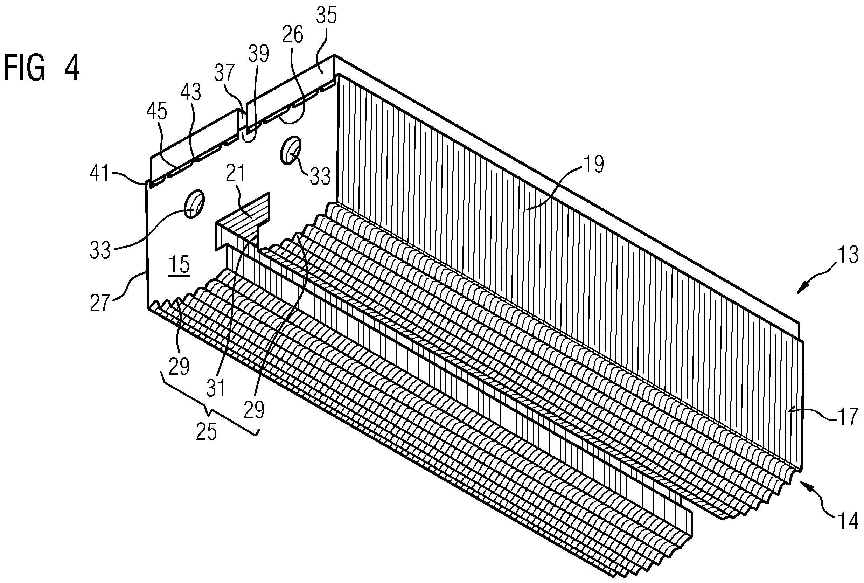

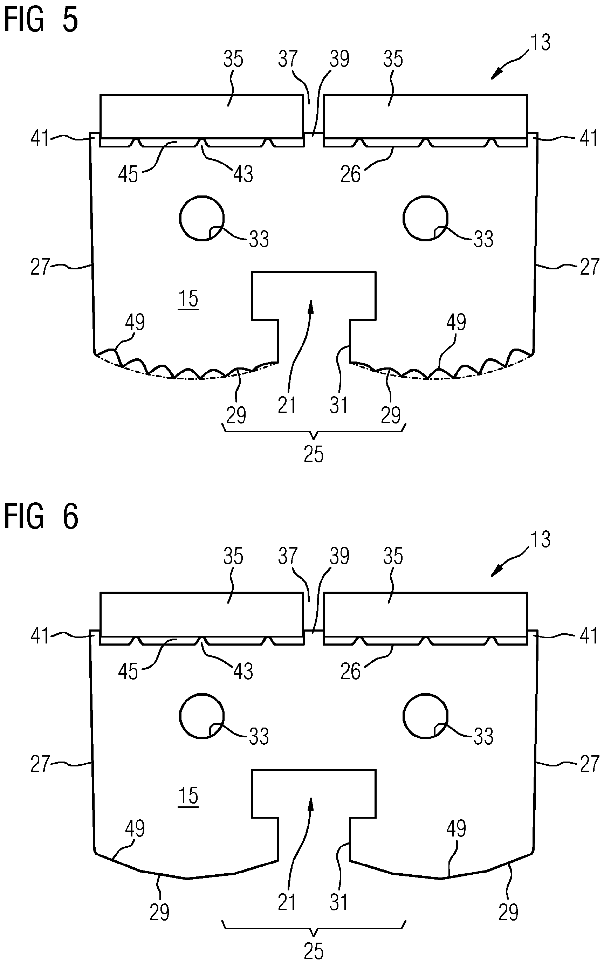

Die Figuren 4 und 5 zeigen ein drittes Ausführungsbeispiel eines Rotorsegments 13. Dabei zeigt Figur 4 eine perspektivische Darstellung und Figur 5 zeigt eine Ansicht von vorne.

Das in den Figuren 4 und 5 dargestellte Ausführungsbeispiel eines Rotorsegments 13 unterscheidet sich von dem in Figur 1 dargestellten Ausführungsbeispiel dadurch, dass die beiden Auflageabschnitte 29 zwar weiterhin im Wesentlichen ballig ausgebildet sind, jedoch jeweils mehrere konkave Unterabschnitte 49 aufweisen. Dabei sind die Unterabschnitte 49 jedes Auflageabschnitts 29 vorzugsweise derart ausgebildet, dass von je zwei Unterabschnitten 49 derjenige Unterabschnitt 49 eine größere Krümmung aufweist, der einem dritten Konturabschnitt 27 näher ist, so dass die Krümmungen der Unterabschnitte 49 jedes Auflageabschnitts 29 von dem Mittelabschnitt 31 zu dem jeweils angrenzenden dritten Konturabschnitt 27 hin zunehmen. Die Figuren 5 und 6 zeigen die Auflageabschnitte 29 mit stark übertrieben dargestellten Krümmungen der Unterabschnitte 49, da eine realistische Darstellung der Auflageabschnitte 29 kaum von einer rein balligen Kontur unterscheidbar wäre.

Figur 6 zeigt ein viertes Ausführungsbeispiel eines Rotorsegments 13 in einer Ansicht von vorne. Das in Figur 6 dargestellte Ausführungsbeispiel eines Rotorsegments 13 unterscheidet sich von dem in den Figuren 4 und 5 dargestellten Ausführungsbeispiel dadurch, dass die Auflageabschnitte 29 gerade statt konkave Unterabschnitte 49 aufweisen. Je zwei benachbarte Unterabschnitte 49 verlaufen in etwas verschiedenen Richtungen, d. h. bilden einen nicht verschwindenden Winkel zueinander, so dass jeder Auflageabschnitt 29 im Wesentlichen ballig ausgebildet ist. Figur 6 zeigt das vierte Ausführungsbeispiel eines Rotorsegments 13 nur schematisch mit wenigen Unterabschnitten 49 und großen Winkeln zwischen benachbarten Unterabschnitten 49. In bevorzugten Realisierungen des vierten Ausführungsbeispiels weisen die Auflageabschnitte 29 jeweils eine größere Anzahl von Unterabschnitten 49 und kleinere Winkel zwischen benachbarten Unterabschnitten 49 auf, deren Darstellung jedoch kaum von einer rein balligen Kontur unterscheidbar wäre.

Analog zu Figur 3 können auch mehrere mit je zwei Permanentmagneten 35 bestückte Segmentblechstapel 14 der in den Figuren 4 bis 6 dargestellten Ausführungsbeispiele durch Vergussmasse 47 zu einem größeren Rotorsegment 13 verbunden werden.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Rotorsegment (13) eines Rotors (3) einer rotierenden elektrischen Maschine (1), das Rotorsegment (13) umfassend
- wenigstens einen als ein Zylinder mit einer Grundfläche (15), die zu einer Rotorachse des Rotors (3) senkrecht ist, und einer zu der Grundfläche (15) senkrechten Mantelfläche (17) ausgebildeten Segmentblechstapel (14), der aus einer Vielzahl von entlang einer zu der Rotorachse parallelen axialen Richtung gestapelten, formgleichen Segmentblechen (19) zusammengesetzt ist,
- wobei die Grundfläche (15) eine Grundflächenkontur bestehend aus einem rotorachsenseitigen ersten Konturabschnitt (25), einem dem ersten Konturabschnitt (25) gegenüber liegenden zweiten Konturabschnitt (26) und zwei dritten Konturabschnitten (27), die jeweils ein Ende des ersten Konturabschnitts (25) und ein Ende des zweiten Konturabschnitts (26) miteinander verbinden, hat
- und der erste Konturabschnitt (25) wenigstens einen im Wesentlichen balligen Auflageabschnitt (29) aufweist,
**dadurch gekennzeichnet, dass**
- jeder Segmentblechstapel (14) rotorachsenseitig eine parallel zu der Rotorachse verlaufende Nut (21) zur Aufnahme eines Nutensteins (23) aufweist
- und jeder erste Konturabschnitt (25) genau zwei im Wesentlichen ballige Auflageabschnitte (29) aufweist, zwischen denen ein Mittelabschnitt (31) liegt, der eine Querschnittsfläche der Nut (21) berandet.

2. Rotorsegment (13) nach Anspruch 1,
**dadurch gekennzeichnet, dass** sich jeder Auflageabschnitt (29) von dem Mittelabschnitt (31) bis zu einem dritten Konturabschnitt (27) erstreckt.

3. Rotorsegment (13) nach einem der vorhergehenden Ansprüche,
**dadurch gekennzeichnet, dass** wenigstens ein Auflageabschnitt (29) mehrere konkave Unterabschnitte (49) aufweist.

4. Rotorsegment (13) nach Anspruch 3,
**dadurch gekennzeichnet, dass** die Unterabschnitte (49) wenigstens eines Auflageabschnitts (29) derart ausgebildet sind, dass von je zwei Unterabschnitten (49) derjenige Unterabschnitt (49) eine größere Krümmung aufweist, der einem dritten Konturabschnitt (27) näher ist.

5. Rotorsegment (13) nach einem der vorhergehenden Ansprüche,
**dadurch gekennzeichnet, dass** wenigstens ein Auflageabschnitt (29) mehrere gerade Unterabschnitte (49) aufweist.

6. Rotorsegment (13) nach einem der vorhergehenden Ansprüche,
**dadurch gekennzeichnet, dass** je zwei benachbarte Segmentbleche (19) wenigstens eines Segmentblechstapels (14) miteinander verklebt sind.

7. Rotorsegment (13) nach einem der vorhergehenden Ansprüche,
**dadurch gekennzeichnet, dass** wenigstens ein Segmentblechstapel (14) eine zur Rotorachse parallele Ausnehmung (33), die sich über eine gesamte Länge des Segmentblechstapels (14) erstreckt, aufweist.

8. Rotorsegment (13) nach einem der vorhergehenden Ansprüche,
**dadurch gekennzeichnet, dass** an einer der Rotorachse gegenüber liegenden Seite der Mantelfläche (17) jedes Segmentblechstapels (14) zwei durch einen sich parallel zur Rotorachse erstreckenden Zwischenraum (37) voneinander beabstandete Permanentmagneten (35) angeordnet sind.

9. Rotorsegment (13) nach einem der vorhergehenden Ansprüche, **gekennzeichnet durch** wenigstens zwei Segmentblechstapel (14), die **durch** eine Vergussmasse (47) miteinander verbunden und relativ zueinander räumlich fixiert sind, so dass ihre Grundflächen (15) in einer gemeinsamen Ebene und ihre Mantelflächen (17) auf derselben Seite dieser Ebene liegen.

10. Rotorsegment (13) nach Anspruch 9,
**dadurch gekennzeichnet, dass** die Vergussmasse (47) ein Polyurethan ist.

11. Rotor (3) einer rotierenden elektrischen Maschine (1), der Rotor (3) umfassend
- einen Blechpaketträger (7) mit einer kreiszylindrischen Trägeroberfläche (9), deren Zylinderachse mit einer Rotorachse des Rotors (3) zusammenfällt,
- und ein Blechpaket (11), das aus den Segmentblechstapeln (14) mehrerer Rotorsegmente (13) gemäß einem der vorhergehenden Ansprüche zusammengesetzt ist,
- wobei die Rotorsegmente (13) an der Trägeroberfläche (9) des Blechpaketträgers (7) nebeneinander angeordnet sind, so dass die Grundflächen (15) der Segmentblechstapel (14) aller Rotorsegmente (13) senkrecht zur Rotorachse sind und jeweils mit wenigstens einem Auflageabschnitt (29) an dem Blechpaketträger (7) anliegen.

## Claims

1. Rotor segment (13) of a rotor (3) of a rotating electrical machine (1), said rotor segment (13) comprising
- at least one stack of segment laminations (14), which is designed as a cylinder having a basal surface (15) that is perpendicular to a rotor axis of the rotor (3) and a lateral surface (17) that is perpendicular to the basal surface (15), and which is composed of a multiplicity of segment laminations (19) that are identical in shape and are stacked in a direction that is parallel to the rotor axis,
- wherein the basal surface (15) has a basal surface contour which consists of a first contour section (25) on the rotor-axis side, a second contour section (26) opposite to the first contour section (25), and two third contour sections (27), each of which connects an end of the first contour section (25) to an end of the second contour section (26),
- and the first contour section (25) has at least one essentially dome-shaped support section (29),
**characterised in that**
- each stack of segment laminations (14) has a groove (21) on the rotor-axis side, said groove (21) running parallel to the rotor axis and being provided for the purpose of accommodating a groove block (23)
- and each first contour section (25) has exactly two essentially dome-shaped support sections (29), between which is situated a centre section (31) that delimits a cross sectional area of the groove (21).

2. Rotor segment (13) according to claim 1,
**characterised in that** each support section (29) extends from the centre section (31) to a third contour section (27).

3. Rotor segment (13) according to one of the preceding claims,
**characterised in that** at least one support section (29) has a plurality of concave subsections (49).

4. Rotor segment (13) according to claim 3,
**characterised in that** the subsections (49) of at least one support section (29) are designed such that of any two subsections (49), that subsection (49) which is closer to a third contour section (27) has a larger curvature.

5. Rotor segment (13) according to one of the preceding claims,
**characterised in that** at least one support section (29) has a plurality of straight subsections (49).

6. Rotor segment (13) according to one of the preceding claims,
**characterised in that** any two adjacent segment laminations (19) of at least one stack of segment laminations (14) are bonded together.

7. Rotor segment (13) according to one of the preceding claims,
**characterised in that** at least one stack of segment laminations (14) has an opening (33) which runs parallel to the rotor axis and extends over an entire length of the stack of segment laminations (14).

8. Rotor segment (13) according to one of the preceding claims,
**characterised in that** two permanent magnets (35) which are separated from each other by an intermediate space (37) that extends parallel to the rotor axis are arranged on that side of the lateral surface (17) of each stack of segment laminations (14) which is opposite to the rotor axis.

9. Rotor segment (13) according to one of the preceding claims,
**characterised by** at least two stacks of segment laminations (14) which are connected together by means of an encapsulating material (47) and are spatially fixed relative to each other, such that their basal surfaces (15) lie on a shared plane and their lateral surfaces (17) lie on the same side of this plane.

10. Rotor segment (13) according to claim 9,
**characterised in that** the encapsulating material (47) is a polyurethane.

11. Rotor (3) of a rotating electrical machine (1), said rotor (3) comprising
- a laminated-core carrier (7) having a circular cylindrical carrier surface (9) whose cylinder axis coincides with a rotor axis of the rotor (3), and
- a laminated core (11) which is composed of the stacks of segment laminations (14) of a plurality of rotor segments (13) according to one of the preceding claims,
- wherein the rotor segments (13) are adjacently arranged on the carrier surface (9) of the laminated-core carrier (7), such that the basal surfaces (15) of the stacks of segment laminations (14) of all rotor segments (13) are perpendicular to the rotor axis and rest against the laminated-core carrier (7) with at least one support section (29) in each case.

## Revendications

1. Segment (13) de rotor d'un rotor (3) d'une machine (1) électrique tournante, le segment (13) de rotor comprenant
- au moins un empilement (14) de tôles de segment constitué sous la forme d'un cylindre ayant une surface (15) de base perpendiculaire à un axe du rotor (3) et d'une surface (17) latérale perpendiculaire à la surface (15) de base, empilement qui est composé d'une pluralité de tôles (19) de segment de même forme empilées suivant une direction axiale parallèle à l'axe du rotor,
- dans lequel la surface (15) de base a un contour constitué d'une première section (25) de contour du côté de l'axe du rotor, d'une deuxième section (26) de contour opposée à la première section (25) de contour et de deux troisièmes sections (27) de contour, qui relient entre elles respectivement une extrémité de la première section (25) de contour et une extrémité de la deuxième section (26) de contour,
- et la première section (25) de contour a au moins une section (29) d'application sensiblement bombée,
**caractérisé en ce que**
- chaque empilement (14) de tôles de segment a, pour la réception d'une coulisse (23) à rainure du côté de l'axe du rotor, une rainure (21) s'étendant parallèlement à l'axe du rotor,
- et chaque première section (25) de contour a exactement deux sections (29) d'application sensiblement bombées, entre lesquelles se trouve une section (31) médiane, qui borde une surface de section transversale de la rainure (21).

2. Segment (13) de rotor suivant la revendication 1, **caractérisé en ce que** chaque section (29) d'application s'étend de la section (31) médiane à une troisième section (27) de contour.

3. Segment (13) de rotor suivant l'une des revendications précédentes,
**caractérisé en ce qu'**au moins un segment (29) d'application a plusieurs sous-segments (49) concaves.

4. Segment (13) de rotor suivant la revendication 3,
**caractérisé en ce que** les sous-segments (49) d'au moins un segment (29) d'application, de manière à ce que de deux sous-segments (49), celui (49) qui a une courbure plus grande est plus proche d'un troisième segment (27) de contour.

5. Segment (13) de rotor suivant l'une des revendications précédentes,
**caractérisé en ce qu'**au moins un segment (29) d'application a plusieurs sous-segments (49) rectilignes.

6. Segment (13) de rotor suivant l'une des revendications précédentes,
**caractérisé en ce que** deux tôles de segment voisines d'au moins un empilement (14) de tôles de segment sont collées entre elles.

7. Segment (13) de rotor suivant l'une des revendications précédentes,
**caractérisé en ce qu'**au moins un empilement (14) de tôles de segment a un évidement (33), qui est parallèle à l'axe du rotor et qui s'étend sur toute la longueur de l'empilement (14) de tôles de segment.

8. Segment (13) de rotor suivant l'une des revendications précédentes,
**caractérisé en ce que**, d'un côté opposé à l'axe du rotor de la surface (17) latérale de chaque empilement (14) de tôles de segment, sont disposés deux aimants (35) permanents mis à distance l'un de l'autre par un espace (37) intermédiaire s'étendant parallèlement à l'axe du rotor.

9. Segment (13) de rotor suivant l'une des revendications précédentes,
**caractérisé par** au moins deux empilements (14) de tôles de segment, qui sont reliés l'un à l'autre par une composition (47) de scellement et qui sont immobilisés dans l'espace l'un par rapport à l'autre, de manière à ce que leur surface (15) de base soit dans un plan commun et leur surface (17) latérale d'un même côté de ce plan.

10. Segment (13) de rotor suivant la revendication 9,
**caractérisé en ce que** la composition (47) de scellement est un polyuréthane.

11. Rotor (3) d'une machine (1) électrique tournante, le rotor comprenant
- un support (7) de paquet de tôles ayant une surface (9) cylindrique de section circulaire, dont l'axe du cylindre coïncide avec un axe du rotor (3),
- et un paquet (11) de tôles, qui est composé des empilements de tôles de plusieurs segments (3) de rotor suivant l'une des revendications précédentes,
- dans lequel les segments (13) de rotor sont disposés les uns à côté des autres sur la surface (9) du support (7) de paquet de tôles, de manière à ce que les surfaces (15) de base des empilements (14) de tôles de tous les segments (13) de rotor soient perpendiculaires à l'axe du rotor et s'appliquent respectivement au support (7) de paquet de tôles par au moins un segment (29) d'application.
